# FASCICULE DE BREVET EUROPEEN

(11) **EP 3 662 535 B1**
(45) Date de publication et mention de la délivrance du brevet: **27.04.2022**
(21) Numéro de dépôt: 18752831.0
(22) Date de dépôt: 30.07.2018
(51) Int. Cl.: H01Q 1/22, H01Q 1/36

(54) **ANTENNE POUR ORGANE ELECTRONIQUE D'UN PNEUMATIQUE**
ANTENNE FÜR EIN ELEKTRONISCHES ELEMENT EINES REIFENS
ANTENNA FOR AN ELECTRONIC MEMBER OF A TYRE

(30) Priorité: 31.07.2017 FR 1757278
(43) Date de publication de la demande: 10.06.2020
(73) Titulaire: Compagnie Générale des Etablissements Michelin, 63000 Clermont-Ferrand (FR)
(72) Inventeur: DESTRAVES, Julien, 63040 Clermont-Ferrand Cedex 9 (FR); NOEL, Sebastien, 63040 Clermont-Ferrand Cedex 9 (FR); TOURENNE, Annabel, 63040 Clermont-Ferrand Cedex 9 (FR); CHEVAUX, Nicolas, 63040 Clermont-Ferrand Cedex 9 (FR)
(74) Mandataire: Roussy, Delphine
(86) Numéro de dépôt international: PCT/FR2018/051956
(87) Numéro de publication internationale: WO 2019/025713

(56) Documents cités:
- EP-A1- 2 765 648
- WO-A1-99/29522
- WO-A1-03/105511
- WO-A1-2012/020203
- WO-A1-2017/046245
- JP-A- 2000 053 939
- US-A- 4 960 473
- US-A- 5 739 232
- US-A1- 2006 014 867
- US-A1- 2008 158 072

## Description

### Domaine de l'invention

L'invention concerne le domaine des organes électroniques pour pneumatique.

### État de la technique

On connaît de l'état de la technique un organe électronique comprenant deux antennes reliées à un dispositif électronique, par exemple une puce, monté sur une platine. Chaque antenne présente une forme sensiblement hélicoïdale. Chaque antenne comprend une âme en acier revêtue directement d'un revêtement en laiton qui est un alliage de cuivre et de zinc dont les proportions sont respectivement de l'ordre de 75% et 25%.

On sait que la conduction électromagnétique pour une telle antenne s'effectue principalement par un effet de peau, c'est-à-dire qu'elle est principalement assurée dans les couches extérieures de l'antenne. Cette épaisseur de peau est notamment fonction de la fréquence du rayonnement et du matériau constitutif de la couche de conduction. À titre d'exemple, pour une fréquence UHF (à titre d'exemple 915 MHz), l'épaisseur de peau est de 2,1 µm pour l'argent, de 2,2 µm pour le cuivre, de 4,4 µm pour le laiton.

Afin de fabriquer l'antenne, on met en forme une âme filiforme nue déroulée à partir d'une bobine de stockage en la déformant plastiquement pour lui donner une forme hélicoïdale. Puis, on revêt l'âme hélicoïdale nue du revêtement en laiton. L'étape de revêtement est effectuée dans un bain électrolytique.

On peut aussi mettre en forme l'antenne après l'avoir revêtue du revêtement en laiton comme le propose le document WO 2012/020203.

Comme rappelé ci-dessus, pour un fonctionnement optimum d'une antenne revêtue de laiton aux fréquences UHF, l'épaisseur de la couche de revêtement ne doit pas être inférieure à 4,4 micromètres.

Mais de telles antennes sont très spécifiques et ainsi demandent un processus de fabrication coûteux. Une épaisseur au-delà de quatre microns peut aussi entraîner des hétérogénéités dans la couche de laiton qui peuvent devenir des points de fragilité de l'antenne en service.

### Description brève de l'invention

L'invention a pour objet une antenne rayonnante dipôle demi onde, pour organe électronique dont la longueur est adaptée pour fonctionner dans la gamme de fréquences comprise entre 860 MHz et 960 MHz, comprenant une âme revêtue d'un revêtement en laiton, l'antenne étant destinée à être intégrée dans une masse de gomme notamment d'un pneumatique, caractérisée en ce que l'épaisseur du revêtement de laiton est comprise entre 0,5 et 4,0 µm.

De façon surprenante, la demanderesse a constaté qu'une telle antenne avec un revêtement en laiton d'épaisseur inférieure à 4,0 µm présente des propriétés de conduction électromagnétique suffisante pour une utilisation dans une masse de gomme notamment d'un pneumatique. En dessous de 0,5 µm, la conduction devient trop perturbée et au-delà de 4,0 µm, le coût du revêtement et de la fabrication de l'antenne deviennent sensiblement plus élevés.

On sait en effet que la radiocommunication dans la bande UHF pour des organes électroniques intégrés à une masse de gomme et pour les gammes de fréquences disponibles n'est pas satisfaisante au-delà du 1GHz. Par conséquent, la gamme de fréquence comprise entre 860MHz et 960 MHZ constitue la gamme de fréquence la plus haute en fréquence exploitable pour ces organes électroniques intégrés dans une masse de gomme telle qu'un pneumatique. La longueur de l'antenne rayonnante demi onde étant inversement proportionnelle à la fréquence de communication dans son milieu afin de fonctionner de façon optimale, cette gamme de fréquence est employée afin de diminuer au maximum la longueur de l'antenne et faciliter ainsi l'intégration de l'antenne et de l'organe électronique qui lui est associée au sein du pneumatique Enfin l'antenne rayonnante est optimisée en champ lointain permettant une communication radiofréquence avec un lecteur externe distant de plusieurs mètres.

L'épaisseur du revêtement en laiton est comprise entre 1 et 2 µm. et de façon très préférentielle, l'épaisseur de revêtement en laiton s'étend de 1,2 à 1,8 µm

Le revêtement extérieur en laiton qui assure la fonction de couche de conduction permet de conduire par effet de peau un signal électromagnétique entre l'antenne et le dispositif électronique qui y est connecté. L'épaisseur du revêtement est conditionnée par le procédé de fabrication de ce revêtement. Il est assez aisé et peu onéreux pour les antennes radio fréquences employées dans les organes électroniques destinés à être intégrés dans un pneumatique de réaliser une couche de revêtement s'tendant de 1,2 à 1,8 µm. L'étape de revêtement est classiquement effectuée dans un bain électrolytique.

De préférence, l'âme de l'antenne est constituée d'acier.

De préférence, le diamètre du fil de l'âme est compris entre 0,15 et 0,32 mm.

Au-delà de 0,32 mm, la mise en forme de l'antenne devient trop difficile et en dessous de 0,15 mm, le procédé d'obtention du fil devient plus complexe et la tenue mécanique de l'antenne devient insuffisante.

De préférence, la teneur en carbone de l'acier de l'âme est inférieure à 1 % et préférentiellement comprise entre 0,5 et 0,8 %.

Cette faible teneur en carbone est très positive pour les propriétés mécaniques de l'acier. La pureté de l'acier est améliorée, c'est-à-dire que les impuretés sont moins nombreuses et cela augmente la rigidité de l'antenne tout en facilitant sa mise en forme sans ruptures.

L'antenne peut aussi comprendre une couche externe d'adhésion de l'antenne à la gomme revêtant le revêtement de laiton ou couche de conduction. Comme son nom l'indique, cette couche assure un contact intime durable entre la masse de gomme adjacente et l'antenne après une étape de réticulation de la masse de gomme.

De préférence, la couche externe d'adhésion revêt directement la couche de conduction. En variante, on pourra revêtir la couche de conduction par une ou plusieurs couches d'adhésion.

La couche d'adhésion peut comprendre un adhésif non métallique et à base aqueuse.

Cet adhésif non métallique peut comprendre deux couches appliquées successivement et dont l'épaisseur totale est comprise entre 1 et 40 µm.

En dessous de 1 µm la performance d'adhésion de l'antenne à la gomme adjacente peut être compromise et au-delà de 40 µm la rigidité de la couche adhésive devient trop importante et peut entraîner des problèmes de fatigue en service de l'antenne.

Un tel adhésif est le Chemlok 8210 et 8007 de Lord Corp. Leur dépôt est de préférence réalisé par pulvérisation pour obtenir une bonne uniformité avec une épaisseur réduite.

La couche adhésive peut aussi être à base d'imide. Elle est de préférence appliquée aussi par pulvérisation, ce qui permet d'obtenir une épaisseur de l'ordre de 2 µm. Un tel adhésif est le Chemlok 6411 ou Chemosil 411-NL.

De préférence, l'antenne comprend au moins une portion hélicoïdale. L'antenne est de préférence destinée à être intégrée dans un pneumatique. Lors du fonctionnement du pneumatique, ce dernier est soumis à des contraintes et déformations qui sont transmises à l'antenne. La forme hélicoïdale permet d'améliorer l'endurance de l'antenne vis-à-vis des contraintes subies par l'antenne. En effet, la forme hélicoïdale confère à l'antenne une souplesse lui permettant de se déformer sans risque de rupture ce qui d'une part rendrait la fonction électronique inopérante et d'autre part présenterait un risque d'endommagement du pneumatique. De préférence, le diamètre extérieur de la portion hélicoïdale est compris entre 0,8 et 1,5 mm et le pas de la portion hélicoïdale est compris entre 5 et 15 tours par centimètre.

L'invention a également pour objet un organe électronique comprenant un transpondeur radiofréquence avec une antenne rayonnante connectée à l'organe électronique, l'antenne étant telle que définie ci-dessus.

Les transpondeurs radiofréquences comprennent usuellement une puce électronique et une antenne rayonnante apte à communiquer avec un lecteur radiofréquence externe.

Selon un premier mode de réalisation, l'antenne rayonnante comportant deux tronçons d'antennes hélicoïdales, la puce électronique est connectée galvaniquement aux deux tronçons d'antennes hélicoïdales.

Selon un autre mode de réalisation, le transpondeur radiofréquence comprend en plus une antenne primaire connectée électriquement à la puce électronique, dans lequel l'antenne primaire est couplée inductivement à l'antenne rayonnante, et dans lequel l'antenne rayonnante est une antenne dipôle constituée d'un ressort hélicoïdal monobrin.

Ce deuxième mode de réalisation a l'avantage de dissocier mécaniquement l'antenne rayonnante des composants électroniques du transpondeur et ainsi de supprimer le point faible des transpondeurs usuels à savoir la zone de fixation des tronçons d'antenne sur le support de la puce électronique. L'intégration d'un tel organe électronique dans un pneumatique permet de réduire les risques de détérioration de l'organe de par sa structure tout en améliorant la performance de radiocommunication et en minimisant les risques liés à l'intégrité physique du pneumatique.

En effet, la détérioration de l'organe électronique provient généralement de défaillances au niveau des connexions électriques existant entre l'antenne rayonnante de communication et la partie électronique de l'organe. Ici aucune connexion mécanique n'est réalisée puisque le transfert d'énergie entre l'antenne de communication et la puce électronique est fait par champ électromagnétique via une antenne primaire. Or, si la dimension de l'antenne rayonnante, liée à la bande de fréquence de communication et à son fonctionnement en champ lointain, est par nature de grande dimension, l'antenne primaire n'est pas soumise à cette contrainte. De ce fait, elle est de plus petite taille en général permettant de supporter aisément les déformations du pneumatique sans générer de trop fortes contraintes mécaniques au sein de sa jonction galvanique avec la puce électronique. Enfin la nature souple de l'antenne rayonnante limite les risques de détérioration de la zone du pneumatique proche du transpondeur.

En second lieu, l'introduction de l'antenne primaire permet de dissocier des fonctions antagonistes entre dimension de l'antenne rayonnante et impédance électrique de la partie électronique de l'organe. Ainsi, il est possible de dimensionner l'antenne primaire afin d'adapter son impédance électrique à la puce pour minimiser les pertes et améliorer de ce fait la performance énergétique de l'organe électronique. Le dimensionnement de l'antenne rayonnante suit alors le seul critère de la fréquence de communication de l'organe électronique. L'ensemble tend à améliorer la performance de radiocommunication de l'organe électronique.

Selon un mode de réalisation préférentiel, l'antenne rayonnante définissant un premier axe longitudinal, l'antenne primaire est une bobine ayant au moins une spire définissant un deuxième axe longitudinal qui est circonscrite dans un cylindre dont l'axe de révolution est parallèle au deuxième axe longitudinal et dont le diamètre est compris entre le tiers et trois fois, de préférence entre la moitié et deux fois, le diamètre moyen du ressort hélicoïdal de l'antenne rayonnante.

Ainsi, l'antenne primaire étant une antenne boucle, le transfert d'énergie entre l'antenne rayonnante et l'antenne primaire est principalement réalisé par couplage inductif. Cela impose alors une certaine proximité (pour limiter l'entrefer entre les deux antennes) entre les deux antennes nécessitant un dimensionnement de la bobine de l'antenne primaire par rapport à l'antenne rayonnante pour assurer une efficacité de transfert d'énergie suffisante pour avoir la qualité de radiocommunication souhaitée. Concrètement, l'antenne primaire peut avantageusement être de diamètre inférieur à celui de l'antenne rayonnante, dans ce cas l'ensemble de la partie électronique du transpondeur est insérée dans l'antenne rayonnante et l'ensemble est particulièrement robuste dans un environnement tel que celui d'un pneumatique.

L'antenne peut aussi être de diamètre supérieur à celui de l'antenne rayonnante, ce cas est particulièrement avantageux lorsque l'on souhaite ajouter au transpondeur radiofréquence d'autres composants électroniques, actifs ou passifs, pour réaliser des fonctions complémentaires, par exemple de surveillance de l'état du pneumatique.

Selon un mode de réalisation avantageux, l'antenne rayonnante ayant une zone centrale entre deux zones latérales et l'antenne primaire ayant un plan médian perpendiculaire au deuxième axe longitudinal, les premier et deuxième axes longitudinaux sont parallèles entre eux et le plan médian de l'antenne primaire est disposé dans la zone centrale de l'antenne rayonnante.

Ainsi on assure à la fois que la distance entre les antennes rayonnante et primaire est constante le long des axes longitudinaux de ces antennes optimisant ainsi au niveau de chaque élément de longueur de l'antenne primaire un transfert d'énergie équivalent. De plus, le champ magnétique créé par une bobine parcourue par un courant électrique étant maximal au centre de la longueur de la bobine (dans le cas d'une antenne λ/2), il est préférable de placer le plan médian de l'antenne primaire dans la zone centrale de l'antenne rayonnante et plus préférentiellement au centre de celle-ci pour maximiser le champ magnétique à l'origine du couplage inductif.

Préférentiellement, dans le cas de pneumatiques, l'antenne primaire est disposée à l'intérieur du ressort hélicoïdal monobrin de l'antenne rayonnante.

L'organe électronique peut être constitué d'un transpondeur radiofréquence. Il peut aussi être constitué d'un transpondeur radiofréquence encapsulé dans une masse de gomme d'enrobage isolante électriquement.

Il est nécessaire pour un bon fonctionnement radiofréquence de l'antenne rayonnante de l'organe électronique, que cette antenne soit noyée dans une masse de gomme d'enrobage isolante électriquement. On peut ainsi utiliser un semi-fini constitué d'un transpondeur radiofréquence noyé dans une masse de gomme isolante électriquement pour le placer dans la structure du pneumatique lors de sa fabrication à la place choisie.

Mais il est aussi possible de placer directement le transpondeur radiofréquence entre deux mélanges du pneumatique lorsque ceux-ci, en raison de leur formulation, sont isolants électriquement.

De préférence, le module en extension de la masse de gomme d'enrobage est inférieur ou égal au module en extension des mélanges caoutchouteux adjacents.

Selon un autre aspect, la constante diélectrique relative de la masse de gomme d'enrobage est inférieure à la constante diélectrique relative des mélanges caoutchouteux adjacents.

Selon un mode de réalisation particulier, la couche extérieure de l'antenne peut être constituée par la couche de laiton et le mélange caoutchouteux de la masse de gomme d'enrobage peut être apte à développer une adhésion forte avec la couche de laiton après vulcanisation.

Ce mode de réalisation est particulièrement avantageux dans le cas où l'antenne du transpondeur radiofréquence de l'organe électronique est dissociée mécaniquement de la puce électronique.

De telles masses de gommes d'enrobages ont par exemple une formulation comportant des sels de cobalt.

L'invention concerne plus particulièrement les pneumatiques destinés à équiper des véhicules de type tourisme, SUV (« Sport Utility Vehicles »), deux roues (notamment motos), avions, comme des véhicules industriels choisis parmi camionnettes, « Poids-lourd » - c'est-à-dire métro, bus, engins de transport routier (camions, tracteurs, remorques), véhicules hors-la-route tels qu'engins agricoles ou de génie civil -, autres véhicules de transport ou de manutention.

### Description des figures

L'invention sera mieux comprise à la lecture de la description qui va suivre, donnée uniquement à titre d'exemple non limitatif et faite en se référant aux dessins dans lesquels :
- la figure 1 présente un transpondeur radio fréquence usuel ;
- la figure 2 présente un fil d'acier destiné à constituer une antenne selon un mode de réalisation de l'invention ;
- la figure 3 présente un fil d'acier destiné à constituer une antenne selon un autre mode de réalisation de l'invention ;
- la figure 4 présente une vue éclatée schématique d'un organe électronique selon un deuxième mode de réalisation ;
- la figure 5 présente une vue en perspective d'un transpondeur radiofréquence selon un mode de réalisation de l'invention dans une configuration où la partie électronique est située à l'intérieur de l'antenne rayonnante ;
- la figure 6 présente une vue en perspective d'un transpondeur radiofréquence selon l'invention dans une configuration où la partie électronique est située à l'extérieur de l'antenne rayonnante ;
- la figure 7 présente une vue de détail d'une antenne rayonnante d'un transpondeur radiofréquence selon un mode de réalisation de l'invention ; et
- la figure 8 présente une vue en perspective de la partie électronique d'un transpondeur radiofréquence dans une configuration où la partie électronique est située à l'intérieur de l'antenne rayonnante
- la figure 9 présente une vue en coupe axiale partielle d'un pneumatique comportant un organe électronique selon l'invention.

### Description détaillée de l'invention

Dans la présente description, sauf indication expresse différente, tous les pourcentages (%) indiqués sont des % en masse.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

Les termes « gomme caoutchouteuse », « mélange caoutchouteux », « gomme » et « mélange » sont utilisés de façon équivalente pour identifier des constituants caoutchouteux d'un pneumatique.

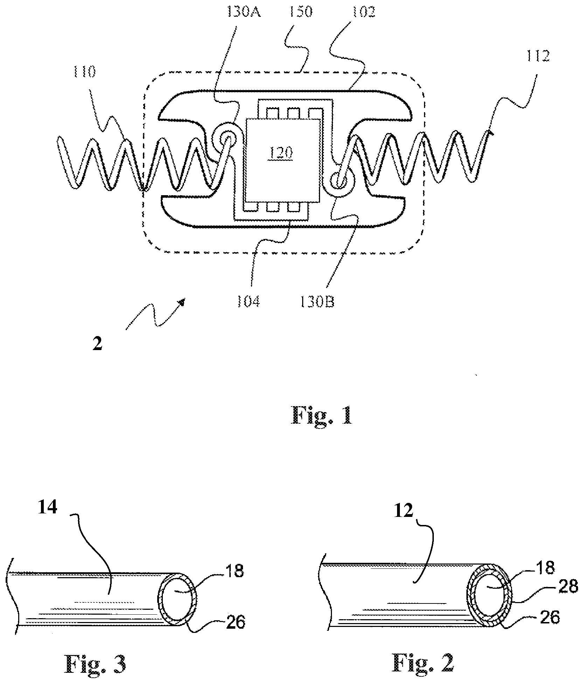

On a représenté sur la figure 1 un organe électronique désigné par la référence générale 2 et destiné à être enrobé d'une gomme d'enrobage caoutchouteuse. Dans le mode de réalisation illustré à la figure 1 le transpondeur radiofréquence de l'organe électronique 2 est un transpondeur radiofréquence usuel, tel que décrit dans le document WO2009134243A1. Ce transpondeur 2 comprend une puce électronique 120 fixée sur un support ou PCB (printed circuit board) 102 et galvaniquement connectée via des pistes conductrices 104, 130A et 130B à deux demi-antennes 110 et 112. Les antennes sont des ressorts hélicoïdaux à âme en fil d'acier. Le contour 150 fait référence à des couches de gomme caoutchouteuse d'enrobage non-conductrice qui recouvrent le PCB, la puce électronique et au moins une partie des deux demi-antennes.

Dans ce qui suit, les deux antennes 110 et 112 étant identiques, on décrira une seule antenne 110 en référence aux figures 2 et 3. Les deux antennes 110 et 112 constituent une antenne dipôle.

L'antenne 110 présente une forme sensiblement hélicoïdale et présente une longueur, un diamètre extérieur et un pas d'hélice définis en fonction des conditions d'utilisation de l'organe électronique. À titre d'exemple, le pas de l'hélice peut être compris entre 5 et 15 tours par centimètre, le diamètre extérieur compris entre 0,8 et 1,5 mm et la longueur de l'ordre de 25 mm. Cette combinaison de caractéristiques est particulièrement utile dans le cas d'un fonctionnement d'un organe électronique dans un pneumatique aux fréquences UHF dans la bande de fréquences comprises entre 860 MHz et 960 MHz.

Selon un premier mode de réalisation illustré à la figure 2, l'antenne 110 est réalisée à partir d'un fil d'acier 12 qui comprend une âme 18 en acier présentant un diamètre externe compris entre 0,15 et 0,32 mm. Le fil 12 comprend également une couche 26 de conduction revêtant directement l'âme 18. La couche 26 de conduction est constituée de laiton et est au contact de l'âme 18. La couche 26 présente une épaisseur comprise entre 1 et 2 micromètres. Bien que l'épaisseur de peau pour le laiton à 915MHz soit de 4,4 micromètres, une couche de laiton dont l'épaisseur est comprise entre 1 à 2 micromètres permet un fonctionnement radiofréquence suffisant dans la gamme de fréquences comprise entre 860 et 960 MHz.

Dans l'exemple illustré à la figure 2, le fil 12 comprend également une deuxième couche 28 d'adhésion revêtant directement la couche de laiton 26. La couche 28 comprend un adhésif non métallique et à base aqueuse. Un exemple d'un tel adhésif est le Chemlok 8210 et 8007 de Lord Corp. On applique successivement le primaire et le secondaire sur le fil 12 de préférence par pulvérisation. L'épaisseur totale de la couche 28 est comprise entre 1 et 40 µm.

En dessous de 1 µm la performance d'adhésion de l'antenne à la gomme adjacente peut être compromise et au-delà de 40 µm la rigidité de la couche adhésive devient trop importante et peut entraîner des problèmes de fatigue en service de l'antenne.

Le dépôt par pulvérisation permet d'obtenir une bonne uniformité avec une épaisseur réduite.

La couche adhésive peut aussi être à base d'imide. Elle est de préférence appliquée aussi par pulvérisation, ce qui permet d'obtenir une épaisseur de l'ordre de 2 µm. Un tel adhésif est le Chemlok 6411 ou Chemosil 411-NL.

La couche d'adhésion assure un contact intime durable entre la masse de gomme adjacente et l'antenne après une étape de réticulation de la masse de gomme.

La figure 3 présente un deuxième mode de réalisation d'un fil 14 destiné à constituer une antenne 110. Dans cet exemple, la couche extérieure du fil 14 est constituée par la couche de conduction de laiton 26 et il n'y a pas de couche additionnelle d'adhésion.

Dans ce cas, c'est la masse de gomme d'enrobage qui sert à enrober l'organe électronique et l'antenne 110 qui a une formulation apte à constituer après vulcanisation une interface solide avec l'antenne. De telles formulations comportent notamment des sels de cobalt comme bien connu de l'homme du métier.

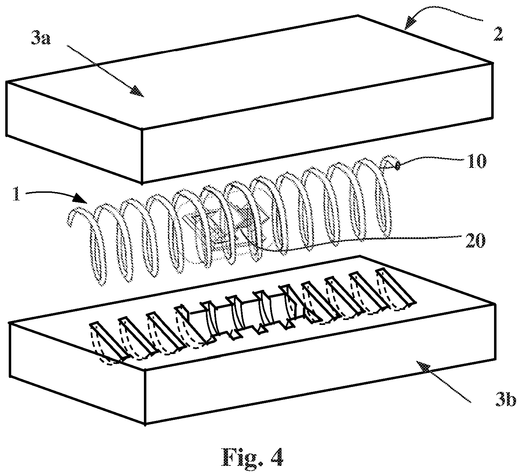

La figure 4 présente un éclaté d'un organe électronique 2. Cet organe 2 comprend un transpondeur radiofréquence 1 noyé entre deux couches 3a et 3b d'un mélange de gomme caoutchouteuse isolant électriquement non-vulcanisé. Un tel organe électronique est un produit semi-fini apte à être intégré dans la structure d'un pneumatique lors de la fabrication de celui-ci.

Le mélange caoutchouteux d'enrobage contient 100 pce (parties pour 100 parties d'élastomère en masse) de polymère tel qu'EPDM (ethylene propylene diene monomer rubber), caoutchouc butyle, néoprène ou d'élastomère diénique tel que SBR (styrene-butadiene rubber), polybutadiène, caoutchouc naturel, ou polyisoprène.

Le mélange peut contenir des charges de type silice, noir de carbone, craie, kaolin :
- avec une charge de type silice à un taux maximum de 50 pce,
- avec une charge de type noir de carbone de grade ASTM supérieur à 700, à un taux inférieur à 50 pce ;
- avec une charge de type noir de carbone de grade inférieur ou égal à 500, à un taux maximum de 20 pce.
- il est possible d'ajouter ou de remplacer ces charges par de la craie ou du kaolin.

De tels taux et types de charges permettent de garantir une permittivité relative inférieure à 6.5, notamment à une fréquence de 915 MHz.

La rigidité à cuit du mélange d'enrobage est de préférence inférieure ou proche de celles des mélanges adjacents.

Le transpondeur radiofréquence 1 de l'organe électronique 2 tel que présenté à la figure 4 correspond à un deuxième mode de réalisation de l'organe électronique 2 qui va être décrit maintenant.

Le transpondeur radiofréquence 1 selon le deuxième mode de réalisation de l'organe électronique 2 comprend une puce électronique 22 et une antenne rayonnante demi onde 10 apte à communiquer avec un lecteur radiofréquence externe. Il comprend en plus une antenne primaire 24 connectée électriquement à la puce électronique 22 et couplée inductivement à l'antenne rayonnante 10. L'antenne rayonnante est une antenne dipôle constituée d'un ressort hélicoïdal monobrin définissant un premier axe longitudinal.

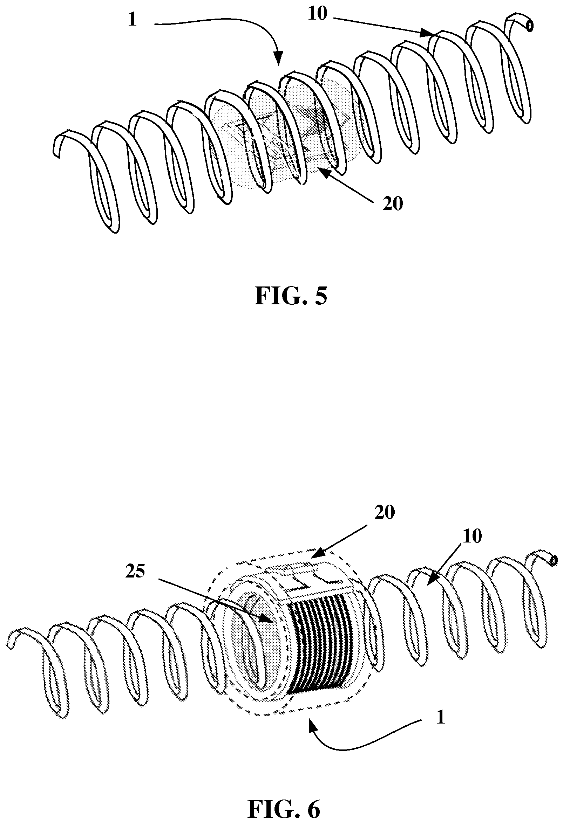

La figure 5 présente un transpondeur radiofréquence 1 dans une configuration où la partie électronique 20 est située à l'intérieur de l'antenne rayonnante 10. La forme géométrique de la partie électronique 20 est circonscrite dans un cylindre dont le diamètre est inférieur ou égal au diamètre intérieur 13 du ressort hélicoïdal 10. L'enfilement de la partie électronique 20 dans l'antenne rayonnante demi onde10 s'en trouve facilité. Le plan médian 21 de l'antenne primaire se trouve dans la zone centrale de l'antenne rayonnante et sensiblement superposé au plan médian 19 de l'antenne rayonnante 10.

La figure 6 présente un transpondeur radiofréquence 1 dans une configuration où la partie électronique 20 se trouve à l'extérieur de l'antenne rayonnante 10. La forme géométrique de la partie électronique 20 présente une cavité cylindrique 25 dont le diamètre est supérieur ou égal au diamètre extérieur 15 de l'antenne rayonnante demi onde10. L'enfilement de l'antenne rayonnante demi onde10 dans la cavité cylindrique 25 de la partie électronique s'en trouve ainsi facilité. Le plan médian 21 de l'antenne primaire se trouve dans la zone centrale de l'antenne rayonnante et sensiblement dans le plan médian 19 de l'antenne rayonnante 10.

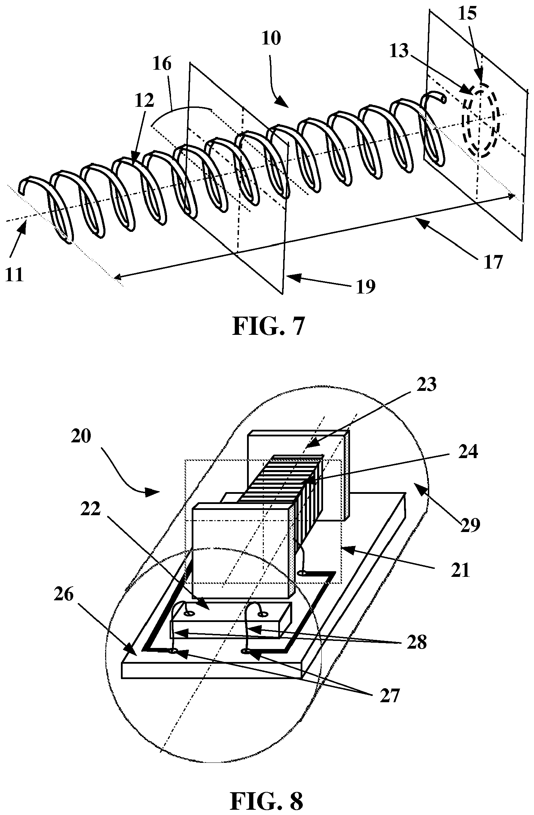

La figure 7 présente une antenne rayonnante 10 constituée du fil en acier 12 de la figure 2, ou du fil de la figure 3, qui a été déformé plastiquement afin de former un ressort hélicoïdal présentant un axe de révolution 11. Ce fil d'acier est revêtu d'une couche de conduction en laiton 26 recouverte dans le cas de la figure 2 d'une couche adhésive 28.

Le fil d'acier peut être revêtu de ces couches puis mis en forme ; alternativement il peut aussi être mis en forme puis revêtu.

Le ressort hélicoïdal est défini tout d'abord par un diamètre d'enroulement du fil revêtu et un pas d'hélice. Ainsi, on détermine précisément des diamètres intérieur 13 et extérieur 15 du ressort hélicoïdal en prenant en compte le diamètre du fil. La longueur 17 du ressort 10 correspond ici à la demi-longueur d'onde du signal de transmission du transpondeur radiofréquence 1 dans une masse caoutchouteuse. Ainsi on peut définir un plan médian 19 au ressort hélicoïdal 10 perpendiculaire à l'axe de révolution 11 séparant l'antenne rayonnante en deux parties égales. Ce plan est au milieu de la zone centrale 16 de l'antenne rayonnante, cette zone centrale 16 correspond environ à 25 % de la longueur totale de l'antenne et de préférence 15 %.

La figure 8 présente la partie électronique 20 d'un transpondeur radiofréquence 1 destiné à une configuration où la partie électronique 20 est située à l'intérieur de l'antenne rayonnante 10. La partie électronique 20 comprend une puce électronique 22 et une antenne primaire 24 connectée électriquement à la puce électronique 22 par l'intermédiaire d'un circuit imprimé 26. L'antenne primaire est ici constituée par une micro bobine CMS (acronyme de Composant Monté en Surface) présentant un axe de symétrie 23. On détermine le plan médian 21 de l'antenne primaire défini par une normale parallèle à l'axe de symétrie 23 de la bobine CMS et séparant la bobine en deux parties égales. La connexion électrique entre les composants sur le circuit imprimé est réalisée à l'aide de pistes en cuivre terminé par des pastilles 27 en cuivre. La connexion électrique des composants sur le circuit imprimé est réalisée à l'aide de la technique dite du « wire bonding » par des fils 28 en or entre le composant et les pastilles 27. L'ensemble constitué du circuit imprimé 26, de la puce électronique 22 de l'antenne primaire 24 est noyé dans une masse rigide 29 en résine époxy haute température isolante électriquement constituant la partie électronique 20 du transpondeur radiofréquence 1.

Ce transpondeur radiofréquence 1 a l'avantage d'être beaucoup plus résistant mécaniquement que les transpondeurs usuels et ainsi est particulièrement adapté à un usage sévère tel que rencontré avec des pneumatiques aptes à rouler à plat.

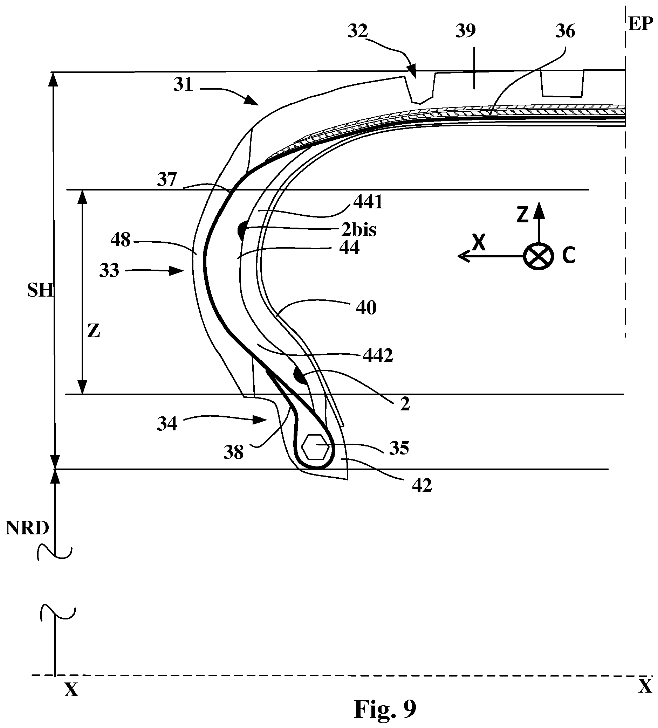

La figure 9 illustre en coupe axiale partielle un pneumatique apte à un roulage à plat et équipé d'un organe électronique selon l'invention. Cette figure indique les directions axiale X, circonférentielle C et radiale Z ainsi que le plan médian EP (plan perpendiculaire à l'axe de rotation du pneumatique qui est situé à mi-distance des deux bourrelets du pneumatique et passe par le milieu de l'armature de sommet) et l'axe de rotation XX du pneumatique 30.

Cette figure indique aussi la hauteur de section SH du pneumatique, c'est-à-dire la distance radiale entre le diamètre nominal de la jante de montage du pneumatique NRD et la partie radialement la plus extérieure de la bande de roulement du pneumatique. Dans le cadre de ce document, on prend comme diamètre nominal de la jante de montage du pneumatique, le diamètre du pneumatique tel qu'indiqué par sa dimension.

Le pneumatique est représenté libre, non monté sur une jante et tel que la largeur entre les deux bourrelets est ramenée à la largeur de la jante nominale ETRTO.

En ce qui concerne la direction axiale, on entend par « axialement extérieur » une direction axiale dirigée vers l'extérieur du pneumatique et par « axialement intérieur » une direction axiale dirigée vers le plan médian EP du pneumatique.

Le pneumatique 30 illustré à la figure 9 est un pneumatique apte au roulage à plat, mais il est choisi à titre purement illustratif et les antennes et organes électroniques décrits peuvent être intégrés dans et à la surface de tous types de pneumatiques comme précédemment indiqué.

Ce pneumatique 30 apte au roulage à plat comporte un sommet 32 renforcé par une armature de sommet ou ceinture 36, un flanc 33 et un bourrelet 34, le bourrelet 34 étant renforcé avec une tringle 35. L'armature de sommet 36 est surmontée radialement extérieurement d'une bande de roulement caoutchouteuse 39. Une armature de carcasse constituée 37 est enroulée autour de la tringle 35 dans le bourrelet 34, le retournement 38 de cette armature 37 étant par exemple disposé vers l'extérieur du pneumatique 30. L'armature de carcasse 37 est de manière connue en soi constituée d'au moins une nappe renforcée par des câbles dits « radiaux », par exemple ici textiles, c'est-à-dire que ces câbles sont disposés pratiquement parallèles les uns aux autres et s'étendent d'un bourrelet à l'autre de manière à former un angle compris entre 80° et 90° avec le plan circonférentiel médian EP. Une couche de gomme intérieure étanche 40 (en anglais « inner liner ») s'étend d'un bourrelet à l'autre radialement intérieurement relativement à l'armature de carcasse 37. Le bourrelet 34 comporte une gomme protectrice (ou « protecteur ») 42 apte à être en contact avec la surface d'une jante. Il comporte aussi une première gomme de bourrage 46 s'étendant radialement extérieurement relativement à la tringle 35.

Le pneumatique 30 est apte à rouler à plat en raison de la présence d'un insert de flanc 44 disposé axialement intérieurement relativement à l'armature de carcasse 33. Cet insert 44 permet à la structure du pneumatique de supporter la charge à pression nulle. L'ordre de grandeur du module d'extension d'une gomme caoutchouteuse d'un insert de flanc est de l'ordre de deux fois la valeur du module d'une gomme de flanc ou plus.

L'insert de flanc 44 de la figure 9 comporte un organe électronique 2 disposé à une distance radiale D1 du point H. Le point H est un des points les plus proches de l'axe de rotation XX. La distance D doit être supérieure à D0 égale à 20 mm pour ne pas pénaliser la qualité de communication entre l'organe électronique et un lecteur externe. Cette distance est supérieure à la hauteur d'un crochet de jante usuel qui est de 17,5 mm.

On place de préférence l'organe électronique dans le semi-fini de l'insert de flanc avant son incorporation dans l'ébauche de pneumatique.

L'insert de flanc 44, dans l'exemple de la figure 9, est constitué de deux masses de gommes 441 et 442 adjacentes axialement l'une à l'autre et les organes électroniques 2 et 2bis sont placés à l'interface entre les deux gommes 441 et 442.

Ce mode de réalisation facilite la mise en place précise et reproductible des organes électroniques lors de la confection du pneumatique.

La figure 9 illustre la zone Z de la hauteur de section SH du pneumatique dans laquelle il est préférable de positionner les organes électroniques. Cette zone Z s'étend de 20 à 70% de SH. L'organe électronique 2 est placé à environ 25% de SH et l'organe 2bis à 60%.

À la figure 9, l'organe électronique est placé à environ 45 % de SH.

Le tableau ci-après présente les résultats d'essais de puissance de communication de transpondeur radio fréquence réalisés avec des antennes dont l'épaisseur de la couche de conduction est variable. Dans ces essais, on évalue la puissance renvoyé par le transpondeur radiofréquence à un lecteur externe suite à l'énergie émise par ce même lecteur externe. Ce lecteur externe étant positionnée à une distance d'environ 1 mètre du transpondeur radiofréquence émet un signal excitateur identique pour tous les échantillons. A partir des spectres de réponses mesurées par le lecteur externe dans la gamme de fréquences comprise entre 860 MHz et 960 MHz., on évalue la puissance reçue par le lecteur externe comme l'intégrale du spectre de réponse sur la gamme de fréquences. Les écarts de puissance sont exprimés en échelle logarithmique.

| Configuration | Diamètre du fil d'acier (mm) | Épaisseur de laiton (µm) | Delta versus référence (écart en dBm) |
|---|---|---|---|
| Référence | 0,202 | 4 Cu 0,5 Ni | - |
| E1 | 0,226 | 1,5 | 0,8 |
| T1 | 0,226 | 0,15 | 2,5 |
| T2 | 0,180 | 0 | 3,1 |
| T3 | 2,22 | 0,15 | 1,7 |

La référence correspond à un transpondeur radiofréquence tel que présenté dans le document WO 2012020202 A1. L'antenne comporte une couche de conduction en cuivre de 4 µm d'épaisseur revêtue d'une couche d'isolation chimique de 0,5 µm d'épaisseur destinée à protéger le cuivre des mélanges caoutchouteux adjacents. Toutes les antennes comportent aussi une couche d'adhésion à base aqueuse telle que précédemment décrite.

Ce transpondeur de référence est quotidiennement incorporé dans la structure de pneumatiques Poids-lourd.

Le transpondeur T1 a une antenne de diamètre 0,226 mm et une couche de laiton de 1,5 µm d'épaisseur. La diminution de puissance de communication est de 0,8 dBm. Cette diminution est sensible mais ne remet pas du tout en cause l'utilisation d'un tel fil d'antenne dans une application à l'intérieur d'un pneumatique. En effet cela correspond environ à une diminution de 8% de la distance de lecture optimale. Cela montre que contrairement à ce qui était couramment accepté, une couche de conduction d'épaisseur inférieure à 4,4 µm dans le cas du laiton est tout à fait utilisable.

Les exemples T1 et T2 sont réalisés avec des fils d'acier comportant respectivement des couches de conduction en laiton de 0,15 µm pour T1 et 0 µm pour T2. Dans ce cas, les puissances de communication sont insuffisantes pour une utilisation en pneumatique fiable.

Enfin l'exemple T3 réalisé avec un fil d'acier de diamètre 2,22 mm et une couche de conduction en laiton de 0,15 µm montre que l'augmentation du diamètre du fil d'acier est tout à fait favorable pour la communication radio fréquence. Cependant, un tel diamètre de fil n'est pas utilisable en raison de la nécessité de la mise en forme hélicoïdale.

## Revendications

1. Antenne rayonnante dipôle demi onde pour organe électronique, dont la longueur est adaptée pour fonctionner dans la gamme de fréquences comprise entre 860 MHz et 960 MHz, comportant une âme revêtue d'un revêtement en laiton, **caractérisée en ce que** l'épaisseur du revêtement de laiton est comprise entre 1,0 et 2,0 µm.

2. Antenne selon la revendication 1, dans lequel l'épaisseur du revêtement de laiton s'étend de 1,2 et 1,8 µm.

3. Antenne selon l'une des revendications précédentes, dans laquelle l'âme de l'antenne est en acier.

4. Antenne selon la revendication 3, dans laquelle la teneur en carbone de l'acier de l'âme est inférieure à 1 %.

5. Antenne selon l'une quelconque des revendications précédentes, dans laquelle le revêtement en laiton est recouvert d'une couche adhésive.

6. Antenne selon la revendication 5, dans laquelle la couche adhésive est non-métallique et à base aqueuse.

7. Antenne selon la revendication 5 , dans laquelle la couche adhésive est à base imide.

8. Antenne selon l'une quelconque des revendications précédentes, comprenant au moins une portion hélicoïdale.

9. Organe électronique, **caractérisé en ce qu'**il comporte un transpondeur radiofréquence comprenant une puce électronique et une antenne rayonnante dipôle selon l'une quelconque des revendications précédentes, apte à communiquer avec un lecteur radiofréquence externe.

10. Organe électronique selon la revendication 9 dans lequel, ladite antenne rayonnante comportant deux tronçons d'antennes hélicoïdales, ladite puce électronique est connectée galvaniquement audits deux tronçons d'antennes hélicoïdales.

11. Organe électronique selon la revendication 9, dans lequel le transpondeur radiofréquence de l'organe électronique comprend en plus une antenne primaire connectée électriquement à la puce électronique, dans lequel l'antenne primaire est couplée inductivement à l'antenne rayonnante, et dans lequel l'antenne rayonnante dipôle est constituée d'un ressort hélicoïdal monobrin définissant un premier axe longitudinal et dans lequel l'antenne primaire est une bobine ayant au moins une spire définissant un deuxième axe longitudinal qui est circonscrite dans un cylindre dont l'axe de révolution est parallèle au deuxième axe longitudinal et dont le diamètre est compris entre le tiers et trois fois, de préférence entre la moitié et deux fois, le diamètre moyen du ressort hélicoïdal de l'antenne rayonnante.

12. Organe électronique selon la revendication 11, dans lequel, l'antenne rayonnante ayant une zone centrale entre deux zones latérales et l'antenne primaire ayant un plan médian perpendiculaire au deuxième axe longitudinal, lesdits premier et deuxième axes longitudinaux sont parallèles entre eux et ledit plan médian de l'antenne primaire est disposé dans la zone centrale de l'antenne rayonnante.

13. Organe électronique selon l'une quelconque des revendications 11à 12, dans lequel l'antenne primaire est disposée à l'intérieur du ressort hélicoïdal monobrin de l'antenne rayonnante.

14. Organe électronique selon l'une quelconque des revendications 9 à 13, comportant un transpondeur radiofréquence encapsulé dans au moins une masse de gomme d'enrobage isolante électriquement.

15. Bandage pneumatique, **caractérisé en ce qu'**il comporte un organe électronique selon l'une quelconque des revendications 9 à 14.

## Patentansprüche

1. Halbwellendipol-Strahlungsantenne für ein Elektronikorgan, deren Länge geeignet ist, im Frequenzbereich zwischen 860 Mhz und 960 Mhz zu arbeiten, aufweisend eine Seele, die mit einer Messingbeschichtung beschichtet ist, **dadurch gekennzeichnet, dass** die Dicke der Messingbeschichtung zwischen 1,0 und 2,0 µm beträgt.

2. Antenne nach Anspruch 1, wobei sich die Dicke der Messingbeschichtung von 1,2 bis 1,8 µm erstreckt.

3. Antenne nach einem der vorhergehenden Ansprüche, wobei die Seele der Antenne aus Stahl ist.

4. Antenne nach Anspruch 3, wobei der Kohlenstoffgehalt des Stahls der Seele geringer als 1 % ist.

5. Antenne nach einem der vorhergehenden Ansprüche, wobei die Messingbeschichtung von einer Klebeschicht bedeckt ist.

6. Antenne nach Anspruch 5, wobei die Klebeschicht nichtmetallisch und auf Wasserbasis ist.

7. Antenne nach Anspruch 5, wobei die Klebeschicht nichtmetallisch und auf Imidbasis ist.

8. Antenne nach einem der vorhergehenden Ansprüche, umfassend wenigstens einen schraubenförmigen Abschnitt.

9. Elektronikorgan, **dadurch gekennzeichnet, dass** es einen Hochfrequenztransponder aufweist, der einen Elektronikchip und eine Dipol-Strahlungsantenne nach einem der vorhergehenden Ansprüche umfasst, die geeignet ist, mit einem externen Hochfrequenzleser zu kommunizieren.

10. Elektronikorgan nach Anspruch 9, wobei, die Strahlungsantenne zwei schraubenförmige Antennenteilstücke aufweisend, der Elektronikchip galvanisch mit den schraubenförmigen Antennenteilstücken verbunden ist.

11. Elektronikorgan nach Anspruch 9, wobei der Hochfrequenztransponder des Elektronikorgans außerdem eine Primärantenne umfasst, die mit dem Elektronikchip elektrisch verbunden ist, wobei die Primärantenne mit der Strahlungsantenne induktiv gekoppelt ist, und wobei die Dipol-Strahlungsantenne von einer einsträngigen Schraubenfeder gebildet ist, die eine erste Längsachse definiert, und wobei die Primärantenne eine Spule mit wenigstens einer Windung ist, die eine zweite Längsachse definiert, die in einem Zylinder begrenzt ist, dessen Umdrehungsachse parallel zur zweiten Längsachse verläuft und dessen Durchmesser zwischen dem Drittel und dem Dreifachen, vorzugsweise zwischen der Hälfte und dem Zweifachen des mittleren Durchmessers der Schraubenfeder der Strahlungsantenne beträgt.

12. Elektronikorgan nach Anspruch 11, wobei, die Strahlungsantenne einen Mittelbereich zwischen zwei Seitenbereichen aufweisend und die Primärantenne eine Mittelebene senkrecht zur zweiten Längsachse aufweisend, die erste und zweite Längsachse zueinander parallel sind und die Mittelebene der Primärantenne im Mittelbereich der Strahlungsantenne angeordnet ist.

13. Elektronikorgan nach einem der Ansprüche 11 bis 12, wobei die Primärantenne innerhalb der einsträngigen Schraubenfeder der Strahlungsantenne angeordnet ist.

14. Elektronikorgan nach einem der Ansprüche 9 bis 13, aufweisend einen Hochfrequenztransponder, der in wenigstens einer elektrisch isolierenden Ummantelungs-Gummimasse gekapselt ist.

15. Luftreifen, **dadurch gekennzeichnet, dass** er ein Elektronikorgan nach einem der Ansprüche 9 bis 14 aufweist.

## Claims

1. Half-wave radiating antenna for an electronic member, the length of which is suitable for operating in the frequency range between 860 MHz and 960 MHz, including a core coated with a brass coating, **characterized in that** the thickness of the brass coating is between 1.0 and 2.0 µm.

2. Antenna according to Claim 1, wherein the thickness of the brass coating ranges from 1.2 to 1.8 µm.

3. Antenna according to either of the preceding claims, wherein the core of the antenna is made of steel.

4. Antenna according to Claim 3, wherein the carbon content of the steel of the core is below 1%.

5. Antenna according to any one of the preceding claims, wherein the brass coating is covered with an adhesive layer.

6. Antenna according to Claim 5, wherein the adhesive layer is non-metallic and water-based.

7. Antenna according to Claim 5, wherein the adhesive layer is imide-based.

8. Antenna according to any one of the preceding claims, comprising at least one helical portion.

9. Electronic member, **characterized in that** it includes a radiofrequency transponder comprising an electronic chip and a radiating antenna according to any one of the preceding claims, capable of communicating with an external radiofrequency reader.

10. Electronic member according to Claim 9, wherein, said radiating antenna comprising two helical antenna segments, said electronic chip is galvanically connected to said two helical antenna segments.

11. Electronic member according to Claim 9, wherein the radiofrequency transponder of the electronic member further comprises a primary antenna that is electrically connected to the electronic chip, wherein the primary antenna is inductively coupled to the radiating antenna, and wherein the radiating antenna is a dipole antenna consisting of a single-strand helical spring defining a first longitudinal axis and wherein the primary antenna is a coil having at least one turn defining a second longitudinal axis that is circumscribed in a cylinder the axis of revolution of which is parallel to the second longitudinal axis and the diameter of which is comprised between one third and three times, and preferably between half and two times, the average diameter of the helical spring of the radiating antenna.

12. Electronic member according to Claim 11, wherein, with the radiating antenna having a central zone between two lateral zones and the primary antenna having a median plane perpendicular to the second longitudinal axis, said first and second longitudinal axes are parallel to one another and said median plane of the primary antenna is arranged in the central zone of the radiating antenna.

13. Electronic member according to either of Claims 11 and 12, wherein the primary antenna is placed in the interior of the single-strand helical spring of the radiating antenna.

14. Electronic member according to any one of Claims 9 to 13, including a radiofrequency transponder encapsulated in at least one electrically insulating encapsulating rubber mass.

15. Tyre, **characterized in that** it includes an electronic member according to any one of Claims 9 to 14.
